# EUROPEAN PATENT APPLICATION

(11) **EP 1 890 352 A1**
(43) Date of publication of application: **20.02.2008**
(21) Application number: 07015522.1
(22) Date of filing: 07.08.2007
(51) Int. Cl.: H01M 8/02, C08G 59/32, C08L 63/00, B29C 45/00

(54) **Fuel cell separator composition, fuel cell separator, and method for producing the same**

(30) Priority: 07.08.2006 JP 2006214594
(71) Applicant: NICHIAS CORPORATION, Tokyo 105-8555 (JP)
(72) Inventor: Shimizu, Takayoshi, Hamamatsu-shi Shizuoka (JP); Murakami, Atsushi, Hamamatsu-shi Shizuoka (JP)
(74) Representative: Grünecker, Kinkeldey, Stockmair & Schwanhäusser Anwaltssozietät

(57) **Abstract**

The present invention provides a fuel cell separator composition which is a molding material for forming a fuel cell separator and comprises (A) a naphthalene ring-containing epoxy resin, (B) a curing agent, (C) a curing accelerator and (D) a carbon material. Also disclosed are a fuel cell separator comprising the composition and a method for producing a fuel cell separator using the composition.

## Description

### FIELD OF THE INVENTION

The present invention relates to a fuel cell separator, a molding material for obtaining the above-mentioned fuel cell separator, and a method for producing the same.

### BACKGROUND OF THE INVENTION

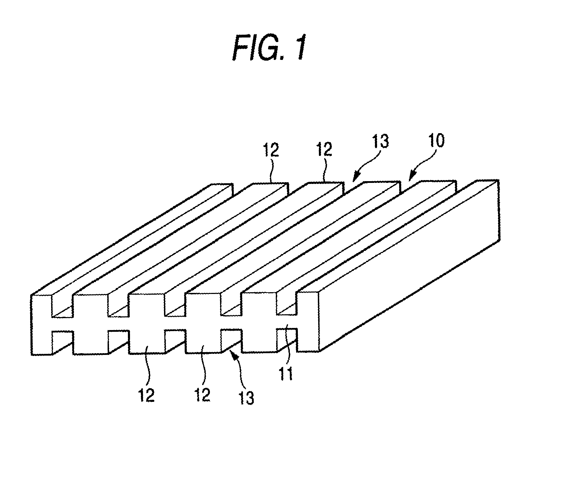

For example, as shown by a schematic perspective view in Fig. 1, a fuel cell separator 10 is formed by providing a plurality of partition walls 12 in a protruding state at predetermined intervals on both sides of a flat plate portion 11. In order to form a fuel cell, a number of fuel cell separators 10 are stacked one on another in the direction to which the partition walls 12 are protruded (the vertical direction in Fig. 1). This stacking allows reactive gas (hydrogen or oxygen) to flow through channels 13 formed by pairs of adjacent partition walls 12. The fuel cell separator is produced by molding a resin composition containing a resin material and a conductive material such as graphite to the shape as described above.

As a method for forming the fuel cell separator, there is generally used a method in which the above-mentioned composition containing a thermosetting resin such as a phenol resin or an epoxy resin as the resin material is placed in a mold provided with flow paths for gas or cooling water, and molded by heat compression molding in which the composition is hot pressed. In this molding method, particularly when expanded graphite is used as a carbon material, high conductivity is exhibited. Accordingly, this is said to be preferred as the fuel cell separator (for example, see patent document 1). Further, in recent years, instead of heat compression molding, it has also been studied to produce the separator by injection molding in order to shorten a molding cycle (for example, see patent document 2).

Patent Document 1: JP-A-2000-285931
Patent Document 2: JP-A-2004-327136

In general, in the case of obtaining a molded article having high conductivity, it is necessary to increase the ratio of a conductive material contained in a composition. However, when the ratio of the conductive material is too high, there is a problem that fluidity of the composition decreases to deteriorate dimensional accuracy or to decrease strength. In particular, when injection molding is performed as a molding method, a decrease in fluidity is liable to induce a phenomenon of failing to fill the composition into a mold, that is, a short shot. Conversely, a decrease in the ratio of the conductive material causes a decrease in conductivity, so that a problem is encountered as the fuel cell separator. Further, it is also a problem that even when the composition is the same, a molded article formed by injection molding is inferior in conductivity to a molded article formed by heat compression molding.

### SUMMARY OF THE INVENTION

As described above, conductivity and fluidity or strength are characteristics which conflict with each other. An object of the invention is to provide a fuel cell separator composition having a combination of conductivity, fluidity and strength, being injection moldable, and having high conductivity. Further, it is another object of the invention to provide a fuel cell separator comprising such a fuel cell separator composition, and being excellent in conductivity, strength, dimensional accuracy and heat resistance.
Other objects and effects of the invention will become apparent from the following description.

In order to achieve the above-mentioned objects, the invention provides the following:
(1) A fuel cell separator composition which is a molding material for forming a fuel cell separator and comprises (A) a naphthalene ring-containing epoxy resin, (B) a curing agent, (C) a curing accelerator and (D) a carbon material;
(2) The fuel cell separator composition described in the above (1), wherein the curing agent (B) has two or more phenolic hydroxyl groups;
(3) The fuel cell separator composition described in the above (1) or (2), wherein the content of the carbon material (D) is from 35 to 85% by weight based on the total amount of the composition, and 5 to 100% by weight of the carbon material is expanded graphite;
(4) A fuel cell separator comprising the fuel cell separator composition described in any one of the above (1) to (3); and
(5) A method for producing a fuel cell separator, which comprises injection molding the fuel cell separator composition described in any one of the above (1) to (3).

According to the invention, a naphthalene ring-containing epoxy resin is used as a resin component, thereby making it possible to efficiently produce, by injection molding, a fuel cell separator excellent in conductivity, dimensional accuracy, and strength at high temperature.

### BRIEF DESCRIPTION OF THE DRAWINGS

Fig. 1 is a perspective view showing one embodiment for illustrating a fuel cell separator of the present invention and a conventional fuel cell separator.
Fig. 2 is a schematic view illustrating a method for measuring the contact resistance.
Fig. 3 is a graph showing the relations between the carbon material amounts and three-point flexural strength obtained in the Examples and Comparative Examples.
Fig.4 is a graph showing the relations between the carbon material amounts and penetrating resistance obtained in the Examples and Comparative Examples.
Fig. 5 is a graph showing the relations between the carbon material amounts and fluidity obtained in the Examples and Comparative Examples.

The reference numerals used in the drawings denote the followings, respectively.
10 : Fuel Cell Separator
11: Flat Plate Portion
12: Partition Walls
13: Channels

### DETAILED DESCRIPTION OF THE INVENTION

The invention will be described in detail below.

The fuel cell separator composition of the invention (hereinafter referred to as "the composition of the invention") contains (A) a naphthalene ring-containing epoxy resin, (B) a curing agent, (C) a curing accelerator and (D) a carbon material as indispensable components.

The use of the naphthalene ring-containing epoxy resin can improve strength and heat resistance of the resulting fuel cell separator. In general, in order to improve strength and heat resistance of an epoxy resin, it is necessary to increase the glass transition temperature. As a means for increasing the glass transition temperature, it is effective to increase the crosslinking density by using a multifunctional epoxy resin or a monomer epoxy resin. Further, it is also effective to use an epoxy resin having a rigid skeleton structure even at a low crosslinking density. The naphthalene ring-containing epoxy resin has a rigid structure due to the naphthalene ring, which increases the glass transition temperature, resulting in showing high strength and heat resistance. Further, the naphthalene ring has a planar structure, and takes a structure in which steric hindrance is extremely small. Accordingly, the fuel cell separator having few voids and higher strength is obtained by using graphite crystals similarly having a planar structure as a carbon material described later. Such an effect becomes significant when flaky graphite such as expanded graphite is used.

The naphthalene ring-containing epoxy resins include a naphthol novolak type epoxy resin, a naphthalene monomer type epoxy resin and the like. The epoxy equivalent is preferably from 50 to 500, and more preferably from 100 to 300. When the epoxy equivalent is too low, a fuel cell separator obtained becomes brittle. On the other hand, when the epoxy equivalent is too high, only a fuel cell separator having low heat resistance and strength is obtained.

The naphthalene ring-containing epoxy resin reacts with the curing agent to form an epoxy-cured product. Various known compounds can be used as the curing agent. Examples thereof include but are not limited to aliphatic, alicyclic and aromatic polyamines such as diethylenetriamine, triethylenetetramine, tetraethylenepentamine, menthenediamine, isophoronediamine, N-aminoethylpiperazine, m-xylenediamine and diaminodiphenylmethane, or carbonates thereof; acid anhydrides such as phthalic anhydride, methyltetrahydrophthalic anhydride, methylhexahydrophthalic anhydride, methylnadic anhydride, dodecylsuccinic anhydride, pyromellitic anhydride, benzophenonetetracarboxylic anhydride, trimellitic anhydride and polyazelaic anhydride; polyphenols such as phenol novolak and cresol novolak; polymercaptans; anionic polymerization catalysts such as tris(dimethylaminomethyl)phenol, imidazole and ethylmethylimidazole; cationic polymerization catalysts such as BF3 and a complex thereof; and further, latent curing agents which form the above-mentioned compounds by thermal decomposition or photodecomposition. The plurality of curing agents can also be used in combination. Of the above, the curing agents such as polyamines or carbonates thereof, acid anhydrides, polyphenols and polymercaptans are called a polyaddition type curing agent, because they themselves react with an epoxy compound by polyaddition reaction to constitute a cured product. An excess or deficiency of the polyaddition type curing agent leads to the remaining of unreacted functional groups, so that the amount thereof added has an appropriate range. In general, the polyaddition type curing agent is used preferably in an amount of 0.7 to 1.2 equivalent, and particularly in an amount of 0.8 to 1.1 equivalent, per epoxy group of an epoxy resin precursor. On the other hand, the anionic polymerization catalysts and the cationic polymerization catalysts act as a polyaddition catalyst for the epoxy group. Accordingly, there is no appropriate addition range, and the amount added can be determined depending on the rate of reaction. These catalysts are called a catalyst type curing agent or an addition type curing agent. Further, when these catalysts are used with the polyaddition type curing agent in combination, they are also called a curing accelerator because they accelerate the curing reaction caused by the polyaddition type curing agent. The curing rate of the thermosetting resin can be arbitrarily changed by variously selecting the kind and amount of curing agent, the kind of thermosetting resin and the kind and amount of curing accelerator. One skilled in the art will easily determine the kinds and amounts of thermosetting resin, curing agent and curing accelerator, depending on desired curing conditions.

Of the above, a compound having two or more phenolic hydroxyl groups is preferred. Such compounds include the above-mentioned polyphenols such as phenol novolak, cresol novolak, bisphenol A novolak, aralkyl type phenol novolak, a triphenylmethane type phenol resin, a terpenephenol resin, naphthol novolak and a phenol dicyclopentadiene resin, and bisphenol A. The use of these curing agents having two or more phenolic hydroxyl groups can provide the fuel cell separator having high heat resistance.

Further, the curing accelerator is used. The curing accelerator accelerates the reaction of the epoxy resin and the polyaddition type curing agent, and is selected from Lewis bases and donor substances therefor. Although the kind of curing accelerator is not particularly limited, examples thereof include but are not limited to phosphorus compounds such as triphenylphosphine, tri-o-tolylphosphine, tri-p-tolylphosphine, tri-m-tolylphosphine, tribenzylphosphine, tris(p-methoxyphenyl)phosphine, tris(p-tert-butoxyphenyl)phasphine, tri-2,4-quinolylphosphine, tri-2,5-quinolylphosphine, tri-3,5-quinolylphosphine, tri-n-octylphosphine, tetrabutylphosphonium bromide, tetraphenylphosphonium bromide, methyl(triphenyl)phosphonium bromide, methyl (triphenyl) - phosphonium chloride, ethyl(triphenyl)phosphonium bromide, n-propyltriphenylphosphonium bromide, n-butyltriphenylphosphonium bromide, methoxymethyltriphenylphosphonium chloride, benzyltriphenylphosphonium chloride, 2-carboxyltriphenylphosphonium bromide, benzyltriphenylphosphonium hexafluoroantimonate, tetraphenylphosphonium tetra-ptolylborate, benzylphenylphosphonium tetraphenylborate, tetraphenylphosphonium tetrafluoroborate and p-tolylphenylphosphonium tetra-p-tolylborate; amine compounds such as tris(dimethylaminomethyl)phenol, N,N-dimethylcyclohexylamine and tetramethylethylenediamine; imidazole compounds such as 2-methylimidazole, 2-undecylimidazole, 2-heptadecylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-undecylimidazolium trimellitate, 1-cyanoethyl-2-phenylimidazolium trimellitate, 2,4-di-amino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, an isocyanuric acid adduct of 2,4-diamino-6-[2'-methylimidazolyl-(1')]-ethyl-s-triazine, an isocyanuric acid adduct of 2-phenylimidazole, an isocyanuric acid adduct of 2-methylimidazole, 2-phenyl-4,5-dihydroxymethylimidazole, 2-phenyl-4-methyl-5-hydroxymethylimidazole and 2,3-dihydro-1H-pyrrolo[1,2-a]benzimidazole; diazabicyclo compounds such as 1,8-diazabicyclo(5,4,0)undecene-7 (abbreviated to DBU), 1,5-diazabicyclo(4,3,0)nonene-5 (abbreviated to DBN) and 6-dibutylamino-1,8-diazabicyclo(5,4,0)undecene-7, or organic acid salt thereof; and urea compounds such as 3-phenyl-1,1-urea, 3-(p-chlorophenyl)-1,1-urea, 3-(3,4-dichlorophenyl)-1,1-urea, 3-(o-methylphenyl)-1,1-urea, 3-(p-methylphenyl)-1,1-,urea, 3-(methoxyphenyl)-1,1-urea and 3-(nitrophenyl)-1,1-urea. Of these, triphenylphosphine is a preferred curing accelerator because it is inexpensive and easily available. The content of the curing accelerator is preferably from 0.1 to 5% by weight based on the total weight of the composition.

The carbon material is a conductive material mainly composed of carbon atoms, and specifically, there can be used expanded graphite, artificial scaly graphite, artificial spherodial graphite, natural scaly graphite, carbon black carbon fiber, carbon nanofiber, carbon nanotube, diamond-like carbon, fullerene, carbon nanohorn or the like. However, it is not limited thereto.

Ordinary scaly graphite is one in which lamellar crystals are laminated. In contrast, the expanded graphite is graphite obtained by treating scaly graphite with concentrated sulfuric acid, nitric acid, a hydrogen peroxide solution or the like, and intercalating such a chemical solution into spaces between the lamellar crystals, followed by further heating to expand the spaces between the lamellar crystals when the intercalated chemical solution is vaporized. The expanded graphite is low in bulk density and large in surface area, and particles thereof are of a thinner lamellar form, compared to scaly graphite and spherical graphite. Accordingly, when mixed with the resin, it easily forms conductive paths to be able to obtain the highly conductive fuel cell separator. Further, the expanded graphite is in a lamellar form, so that it is flexible compared to artificial graphite and natural graphite, and the fuel cell separator using the same also becomes flexible.

For this reason, it is preferred that the carbon material contains the expanded graphite, including the above-mentioned effect of improving strength and heat resistance. In that case, the carbon material may be entirely composed of the expanded graphite, or may comprise the expanded graphite as a part thereof and the above-mentioned carbon material(s) as the rest thereof. That is to say, the ratio of the expanded graphite in the carbon material is preferably from 5 to 100% by weight, more preferably from 10 to 100% by weight, still more preferably from 20 to 80% by weight, yet still more preferably from 30 to 80% by weight, particularly preferably from 30 to 70% by weight, and most preferably from 40 to 60% by weight. When the ratio of the expanded graphite is low, contact resistance increases. Further, when the ratio of the expanded graphite is high, material handling properties at the time of kneading in the preparation of the compound are inferior, and there is a fear of contaminating the working environment, because the expanded graphite is low in bulk density.

The content of the carbon material is preferably from 35 to 85% by weight of the total amount of the composition, although it depends on the kind of carbon material. When the ratio of the carbon material is too low, conductivity decreases. On the other hand, when the ratio of the carbon material is too high, strength decreases, and fluidity of the compound decreases. Accordingly, when injected into a mold in molding, the pressure distribution of the molding material in the mold becomes broad to deteriorate the dimensional accuracy of the fuel cell separator obtained. In particular, such a problem becomes significant when injection molding preferred in terms of molding efficiency is performed.

The composition of the invention can be produced by various conventional methods. For example, the composition may be obtained by dry mixing of the naphthalene ring-containing epoxy resin and the other components such as the carbon material. Further, the naphthalene ring-containing epoxy resin may be heat melted or dissolved in a solvent, followed by addition of the other components such as the carbon material thereto. Furthermore, a plurality of mixing methods may be used in combination, such as heat melting of the materials preliminarily mixed by dry mixing.

As the apparatus used for mixing, various apparatus can be used. Examples thereof include but are not limited to a Henschel mixer, a ribbon mixer, a planetary mixer, a mortar mixer, a corn mixer, a V mixer, a pressure kneader, a paddle mixer, a twin-screw extruder, a single-screw extruder, a Banbury mixer, a two-roll mill, a three-roll mill and the like. Further, the materials mixed can also be pulverized or granulated and further classified as needed.

The fuel cell separator of the invention is obtained by molding the composition thus obtained. As molding methods, there are available known methods such as injection molding, injection compression molding, extrusion molding and compression molding. However, injection molding is preferred in terms of molding efficiency. In any of the molding methods, molding conditions are appropriately set depending on the compounding ratio of the composition. Further, it is also possible to conduct cutting after molding as needed.

There is no limitation on the shape and structure of the fuel cell separator. For example, the shape shown in Fig. 1 can be used.

### EXAMPLES

The present invention will be illustrated in greater detail with reference to the following Examples and Comparative Examples, but the invention is not construed as being limited thereto.

### EXAMPLES 1 TO 8 AND COMPARATIVE EXAMPLES 1 TO 6

According to the formulations shown in Table 1, 500 g of the total of materials were preliminarily mixed in a 10-liter Henschel mixer, and then, kneaded in a 1-liter pressure kneader at a chamber temperature of 100°C for 5 minutes. The resulting product was pulverized with a pulverizer to particles having a size of about 1 mm to obtain a molding material, which was injection molded. Units in the formulations in Table 1 are expressed in percentages by weight. Structural formulas of the naphthol novolak type epoxy resin and the naphthalene monomer type tetrafunctional epoxy resin are shown below:

Naphthol Novolak Type Epoxy Resin 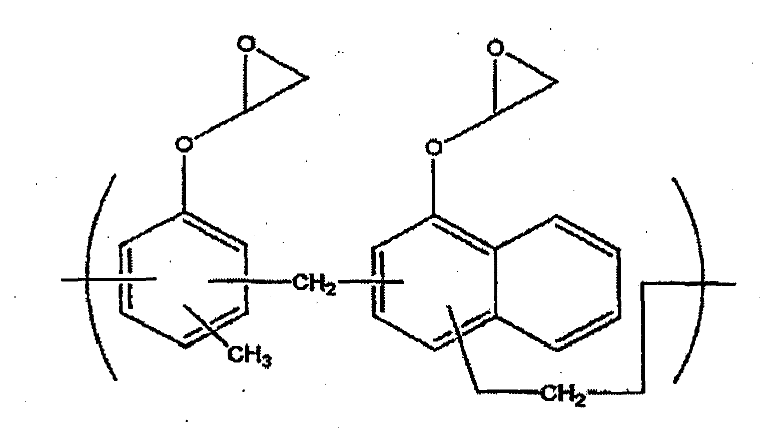 Naphthalene Monomer Type Tetrafunctional Epoxy Resin

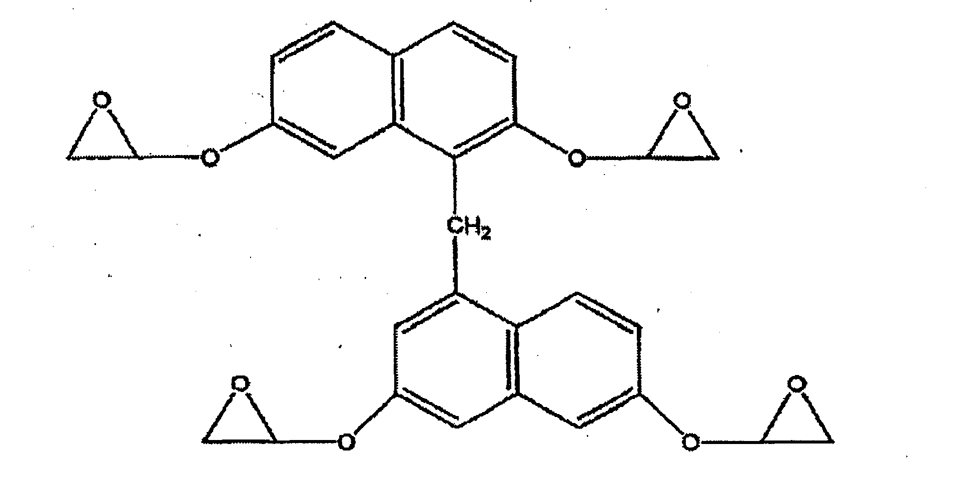

For molding conditions, using a molding machine for thermosetting resins (manufactured by Hishiya Seiko Co., Ltd.) having a mold clamping force of 80 t as an injection molding machine, the cylinder temperature was set to 50°C under a hopper, the nozzle temperature to 90°C, the mold temperature to 170°C, the injection rate to 20 mm/sec, and the curing time to from 60 to 180 sec. The molding pressure was appropriately set within the range of 30 to 70 MPa. The molding material was injection molded into a square thin plate sample 100 mm on one side and 2 mm in thickness, and the following evaluations were made. The results thereof are shown together in Table 1.

### (1) Evaluation of Conductivity:

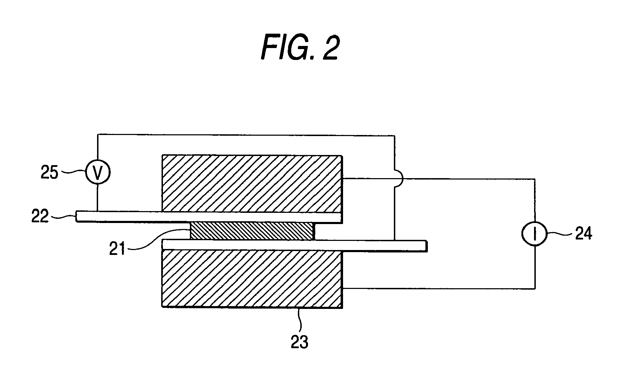

The resistance in a penetrating direction was measured by the method shown in Fig. 2 to make the evaluation of conductivity. A sample 21 was set between electrodes 23 with the interposition of carbon papers 22. The electric resistance was calculated from the current allowed to flow between the electrodes (measured with an ammeter 24) and the voltage between the carbon papers (measured with a voltmeter 25), and multiplied by the area of the sample to obtain the resistivity in the penetrating direction.

### (2) Measurement of Flexural Strength at High Temperature:

The flexural strength at a high temperature was determined based on JIS K7171, Plastics-Test Methods of Flexural Characteristics. The test was performed using an Instron type universal tester equipped with a thermostat in a test atmosphere of 100°C.

### (3) Evaluation of Fluidity:

The fluidity of the molding material was determined at 160±3°C in accordance with JIS K6911, Thermosetting Plastics, General Test Methods, "Extrusion Type Flow, Phenol Resin Having Good Flow". The outflow amount was taken as an index of fluidity.

**Table 1**

| | Ex. 1 | Ex. 2 | | Ex 3 | | Ex 4 | Ex. 5 | Ex. 6 | | Ex 7 | | Ex 8 |
|---|---|---|---|---|---|---|---|---|---|---|---|---|
| Naphthol Novolak Type Epoxy Resin (EP Equivalent: 230) | 6.4 | 13.0 | | 19.3 | | 25.9 | | | | | | |
| Naphthalene Monomer Type Tetrafunctional Epoxy Resin (EP Equivalent: 160) | | | | | | | 5.6 | 11.4 | | 16.9 | | 22.6 |
| Bisphenol A Novolak Type Epoxy Resin (EP Equivalent: 207) | | | | | | | | | | | | |
| Orthocresol Novolak Type Epoxy Resin (EP Equivalent: 211) | | | | | | | | | | | | |
| Dicyclopentadiene Type Epoxy Resin (EP Equivalent 265) | | | | | | | | | | | | |
| Novolak Type Phenol Resin | 3.0 | 5.9 | | 8.9 | | 11.8 | 3.7 | 7.4 | | 11.1 | | 14.8 |
| Triphenylphosphine | 0.3 | 0.6 | | 0.9 | | 1.2 | 0.4 | 0.7 | | 1.1 | | 1.5 |
| Expanded Graphite (average particle size: 300 µm) | 43.7 | 38.8 | | 34.0 | | 29.1 | 43.7 | 38.8 | | 34.0 | | 29.1 |
| Artificial Graphite (average particle size: 40 µm) | 43.7 | 38.8 | | 34.0 | | 29.1 | 43.7 | 38.8 | | 34.0 | | 29.1 |
| Processing Aid | 2.9 | 2.9 | | 2.9 | | 2.9 | 2.9 | 2.9 | | 2.9 | | 2.9 |
| Carbon Material Content (% by weight) | 87.4 | 77.6 | | 68.0 | | 58.2 | 87.4 | 77.6 | | 68.0 | | 58.2 |
| 100°C-Three-point Flexural Strength (MPa) | 28 | 39 | | 44 | | 57 | 29 | 41 | | 45 | | 60 |
| Resistance in Penetrating Direction (mΩ·cm²) | 8 | 9 | | 10 | | 15 | 9 | 10 | | 12 | | 16 |
| Fluidity by Extrusion Type Flow (g) | 14 | 27 | | 36 | | 38 | 11 | 18 | | 30 | | 33 |
| | | | | | | | | | | | | |

| | Com. Ex.1 | | Com. Ex. 2 | | Com. Ex. 3 | | Com. Ex. 4 | | Com. Ex. 5 | | Com. Ex 6 | |
|---|---|---|---|---|---|---|---|---|---|---|---|---|
| Naphthol Novolak Type Epoxy Resin (EP Equivalent. 230) | | | | | | | | | | | | |
| Naphthalene Monomer Type Tetrafunctional Epoxy Resin (EP Equivalent: 160) | | | | | | | | | | | | |
| Bisphenol A Novolak Type Epoxy Resin (EP Equivalent 207) | 6.2 | | 12.6 | | 18.7 | | 25.0 | | | | | |
| Orthocresol Novolak Type Epoxy Resin (EP Equivalent: 211) | | | | | | | | | 25.2 | | | |
| Dicyclopentadiene Type Epoxy Resin (EP Equivalent: 265) | | | | | | | | | | | 27.2 | |
| Novolak Type Phenol Resin | 3.2 | | 6.3 | | 9.5 | | 12.6 | | 12.5 | | 10.6 | |
| Triphenylphosphine | 0.3 | | 0.6 | | 0.9 | | 1.3 | | 1.2 | | 1.1 | |
| Expanded Graphite (average particle size: 300 µm) | 43.7 | | 38.8 | | 34.0 | | 29.1 | | 29.1 | | 29.1 | |
| Artificial Graphite (average particle size: 40 µm) | 43.7 | | 38.8 | | 34.0 | | 29.1 | | 29.1 | | 29.1 | |
| Processing Aid | 2.9 | | 2.9 | | 2.9 | | 2.9 | | 2.9 | | 2.9 | |
| Carbon Material Content (% by weight) | 87.4 | | 77.6 | | 68.0 | | 58.2 | | 58.2 | | 58.2 | |
| 100°C-Three-point Flexural Strength (MPa) | 22 | | 31 | | 35 | | 45 | | 46 | | 49 | |
| Resistance in Penetrating Direction (mΩ·cm²) | 7 | | 8 | | 11 | | 17 | | 17 | | 20 | |
| Fluidity by Extrusion Type Flow (g) | 7 | | 15 | | 25 | | 29 | | 27 | | 28 | |

As shown in Table 1, it is apparent that the fuel cell separator excellent in conductivity, fluidity and further strength at high temperature can be efficiently produced by injection molding by using the naphthalene ring-containing epoxy resin as the resin component, according to the invention.

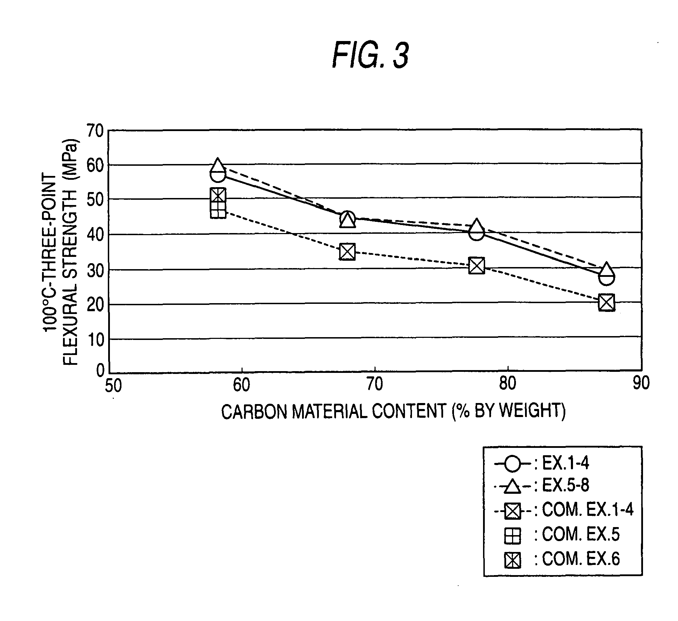

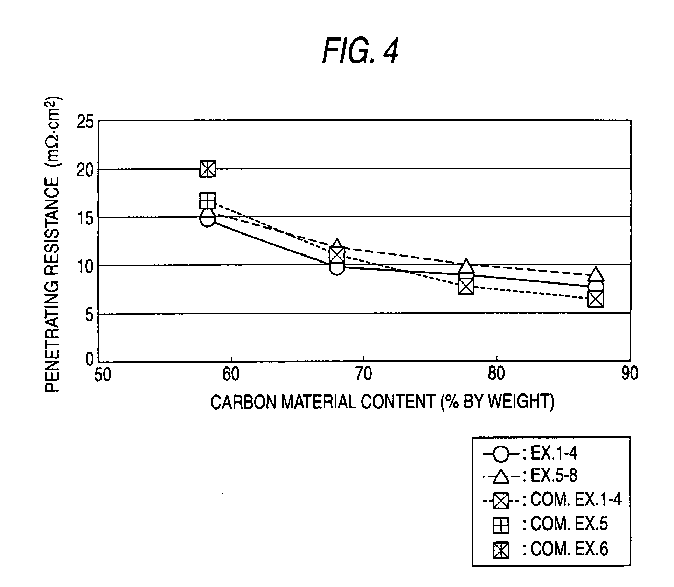

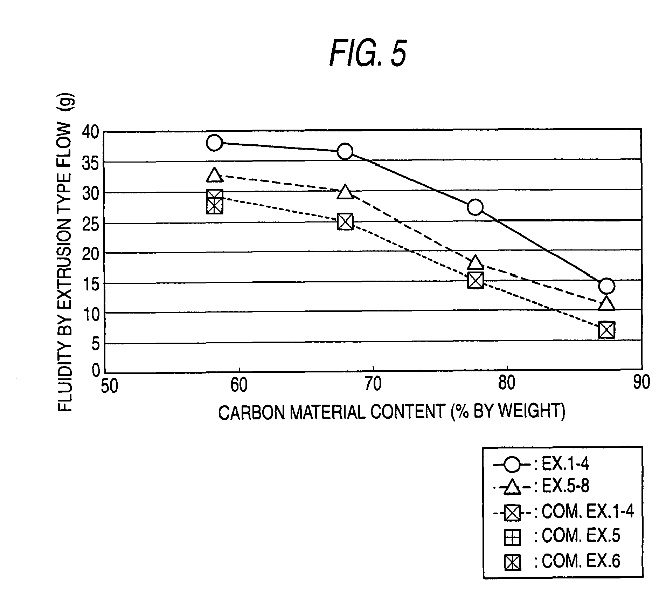

Further, the relations between the carbon material contents and three-point flexural strength are shown as a graph in Fig. 3, the relations between the carbon material contents and penetrating resistance are shown as a graph in Fig. 4, and the relations between the carbon material contents and fluidity are shown as a graph in Fig. 5. It is revealed that even when the carbon material contents are the same with each other, the use of the naphthalene ring-containing epoxy resin according to the invention increases mechanical strength, decreases resistance, and provides excellent fluidity and moldability.

While the present invention has been described in detail and with reference to specific embodiments thereof, it will be apparent to one skilled in the art that various changes and modifications can be made thereto without departing from the spirit and scope thereof.
This application is based on Japanese Patent Application No. 2006-214594 filed August 7, 2007, and the contents thereof are herein incorporated by reference.

## Claims

1. A fuel cell separator composition which is a molding material for forming a fuel cell separator and comprises (A) a naphthalene ring-containing epoxy resin, (B) a curing agent, (C) a curing accelerator and (D) a carbon material.

2. The fuel cell separator composition according to claim 1, wherein the curing agent (B) has two or more phenolic hydroxyl groups.

3. The fuel cell separator composition according to claim 1 or 2, wherein the content of the carbon material (D) is from 35 to 85% by weight based on the total amount of the composition, and 5 to 100% by weight of the carbon material is expanded graphite.

4. A fuel cell separator comprising the fuel cell separator composition according to any one of claims 1 to 3.

5. A method for producing a fuel cell separator, which comprises injection molding the fuel cell separator composition according to any one of claims 1 to 3.
